Europäisches Patentamt

European Patent Office

Office européen des brevets

(19)

(11) Veröffentlichungsnummer: **0 139 839**
**A1**

(12) # EUROPÄISCHE PATENTANMELDUNG

(21) Anmeldenummer: 84107162.4

(22) Anmeldetag: 22.06.84

(51) Int. Cl.⁴: **F 16 K 31/06**

(30) Priorität: 30.07.83 DE 3327589

(43) Veröffentlichungstag der Anmeldung:
08.05.85 Patentblatt 85/19

(84) Benannte Vertragsstaaten:
AT BE CH DE FR GB IT LI LU NL SE

(71) Anmelder: A. und K. Müller GmbH & Co. KG
Bücherstrasse 31-37
D-4000 Düsseldorf 13(DE)

(72) Erfinder: Müller, Kurt
Benrather Schlossufer 61
D-4000 Düsseldorf 13(DE)

(74) Vertreter: Feder, Heinz, Dr.
Dominikanerstrasse 37
D-4000 Düsseldorf 11(DE)

(54) Elektromagnetisch betätigtes Ventil.

(57) Ein Ventil, insbesondere Elektromagnetventil, mit Mediumstrennung, mit einem Ventilgehäuse (1), in dem eine Ventilkammer (2) angeordnet ist, die mit einem Zuflußkanal (3) und über einen Ventilsitz (4) mit einem Abflußkanal (5) verbunden ist. Das Betätigungsteil (7) ist über einen Ventilschaft (11) mit einem Ventilteller (6)verbunden. Der in die Ventilkammer (2) ragende Abschnitt des Ventilschaftes (11) ist von einem Schlauchstück (13a) umgeben. Das eine Ende des Schlauchstückes (13a) ist mit dem Ventilschaft (11), das andere Ende mit dem Ventilgehäuse (1) fest und dichtend verbun den. Zwischen dem Schlauchstück (13a) und dem Ventilschaft (11) ist eine Schraubendruckfeder so angeordnet, daß sich ein Ende der Schraubendruckfeder (14) an der Wand des Ventilgehäuses (1) und das andere Ende am Ventilschaft (11) abstützt. Unter der Wirkung des Mediumsdruckes wird das Schlauchstück (13a) zwischen die Windungen der Schraubenfeder (14) hineingedrückt und entlastet diese, so daß bei erhöhtem Mediumsdruck der durch den Mediumsdruck heraufgesetzte Schließ- oder Öffnungsdruck durch die Entlastung der Schraubendruckfeder mindestens teilweise kompensiert wird.

Fig. 1

0139839

Ventil, insbesondere Elektromagnetventil, mit Mediumstrennung.

Gegenstand der Erfindung ist ein Ventil, insbesondere ein Elektromagnetventil, mit den Merkmalen aus dem
Oberbegriff des Patentanspruchs 1.

Ein derartiges Ventil hat die Eigenschaft, daß die
Ventilkammer vom Betätigungsteil derart abgetrennt ist,
daß das Medium nicht in das Betätigungsteil, insbesondere bei einem Elektromagnetventil nicht in den Raum zwischen Magnetanker und Magnetspule, eindringen kann.

Es ist bereits ein Mehrwegemagnetventil bekannt (CH-PS
420 762), bei dem der Ventilschaft von dem schlauchartig
ausgebildeten Mittelteil einer in der Ventilkammer angeordneten Trennmembran koaxial umgeben ist und das Ende
des schlauchartigen Mittelteils mit dem Ventilschaft
fest und dichtend verbunden ist und der Außenrand der
Trennmembran dichtend mit der die Öffnung aufweisenden
Wand verbunden ist. Bei diesem bekannten Ventil erfolgt
die durch das Betätigungsteil bewirkte Öffnungs- oder
Schließbewegung des Ventiltellers gegen die Kraft eines
als Schraubendruckfeder ausgebildeten Druckfederelementes. Wie bei anderen Ventilen bekannter Bauart ist
dieses Druckfederelement außerhalb der Ventilkammer am
Magnetanker angeordnet. Dies hat den Nachteil, daß am
Magnetanker ein Verlust an Polfläche entsteht, der zu
einem erhöhten Energieaufwand für das Betätigungsteil
führt.

Ventile der oben und im Oberbegriff des Patentanspruchs
1 erwähnten Bauart haben im allgemeinen die Eigenschaft,

daß die vom Mediumsdruck baufschlagten Flächen innerhalb der Ventilkammer so ausgebildet sind, daß durch den Mediumsdruck eine der Kraft des Druckfederelementes gleichgerichtete Kraftkomponente entsteht. Dies bedeutet, daß bei einem im Ruhezustand schließenden Ventil, bei dem die Schließkraft durch das Druckfederelement bewirkt wird, der anstehende Mediumsdruck diese Schließkraft verstärkt, was zur Folge hat, daß das Ventil unter hohem Mediumsdruck, gegebenenfalls nicht oder nur bei entsprechender Erhöhung der von dem Betätigungsteil ausgeübten Anzugskraft öffnet.

Bei einem im Ruhezustand öffnenden Ventil, bei dem die Öffnungskraft durch das Druckfederelement bewirkt wird, wird die Öffnungskraft durch den anstehenden Mediumsdruck verstärkt. Dies kann bedeuten, daß bei hohem Mediumsdruck das Ventil nicht oder nur bei erhöhter Anzugskraft durch das Betätigungsteil schließt.

Die der Erfindung zugrunde liegende Aufgabe bestand darin, ein Ventil, insbesondere ein Elektromagnetventil, der oben beschriebenen Bauart so auszugestalten, daß mindestens bei höherem Mediumsdruck die aus der Kraft des Druckfederelementes und der durch den Mediumsdruck erzeugten Kraftkomponente zusammengesetzte Gesamtkraft möglichst wenig ansteigt. Damit soll erreicht werden, daß das Öffnen und Schließen des Ventils auch unter hohem Mediumsdruck sichergestellt ist, ohne daß das Betätigungsteil entsprechend überstark ausgelegt werden muß.

Die Lösung dieser Aufgabe geschieht erfindungsgemäß mit den Merkmalen aus dem kennzeichnenden Teil des Patentanspruchs 1.

Die Erfindung geht dabei von der Erkenntnis aus, daß es möglich ist, durch Verlegung des Druckfederelementes an eine Stelle im Ventilgehäuse, die dem Mediumsdruck selbst ausgesetzt ist, zu erreichen, daß dieser Mediumsdruck eine Kraftkomponente erzeugt, die an dem Druckfederelement selbst angreift, und zwar im Sinne einer Entlastung des Druckfederelementes. Dies hat zur Folge, daß bei steigendem Mediumsdruck die der Öffnung- oder Schließbewegung des Ventiltellers entgegenwirkende Kraft des Druckfederelementes herabgesetzt wird, so daß zusammen mit den Kräften, die von den übrigen vom Mediumsdruck beaufschlagten Flächen erzeugt werden, eine Gesamtschließkraft oder Gesamtöffnungskraft erzeugt wird, die nicht oder nur wenig druckabhängig ist. Durch die Verlegung des Druckfederelementes wird bei einem Elektromagnetventil der zusätzliche Vorteil erreicht, daß eine Störung und Verkleinerung der Polfläche des Magnetankers durch das sonst im allgemeinen in einer Bohrung des Magnetankers angeordnete Druckfederelement vermieden wird.

Wie weiter unten anhand von Ausführungsbeispielen näher erläutert, wird bei dem erfindungsgemäßen Ventil das Schlauchstück durch den Mediumsdruck zwischen die Windungen der Schraubendruckfeder bzw. zwischen die Teller eines Tellerfederpaketes hineingedrückt. Innerhalb vorgegebener Druckbereiche und in Abhängigkeit von der Dimensionierung des Druckfederelementes und des Schlauchstückes läßt sich hierdurch eine Abstützung und Entlastung des Druckfederelementes erreichen.

Vorteilhafte Ausführungsformen des erfindungsgemäßen Ventils sind in den Unteransprüchen beschrieben.

Das erfindungsgemäße Ventil kann, wie auch in den Ausführungsbeispielen beschrieben, sowohl als im Ruhezustand schließendes als auch im Ruhezustand öffnendes

Ventil ausgebildet sein und es kann als Elektromagnetventil je nach Ausführungsart mit Gleichstrom oder
Wechselstrom betrieben werden.

Im folgenden werden anhand der beigefügten Zeichnungen
Ausführungsbeispiele sowie die Wirkungsweise des
erfindungsgemäßen Ventils näher erläutert.

In den Zeichnungen zeigen:

Fig. 1 in schematischer geschnittener Darstellung ein
mit Gleichstrom betriebenes im Ruhezustand
schließendes Elektromagnetventil;

Fig. 2 eine andere Ausführungsform eines mit Gleichstrom betriebenen im Ruhezustand schließenden
Elektromagnetventils;

Fig. 3 ein mit Gleichstrom betriebenes im Ruhezustand
öffnendes Elektromagnetventil;

Fig. 4 in einer qualitativen Darstellung einen grundsätzlichen Verlauf der das Druckfederelement
entlastenden Kräfte in Abhängigkeit vom
Mediumsdruck;

Fig. 5 in einer vergrößerten geschnittenen Teildarstellung eine Schraubendruckfeder innerhalb des Schlauchstückes bei einem der
Elektromagnetventile nach Fig. 1 bis 3.

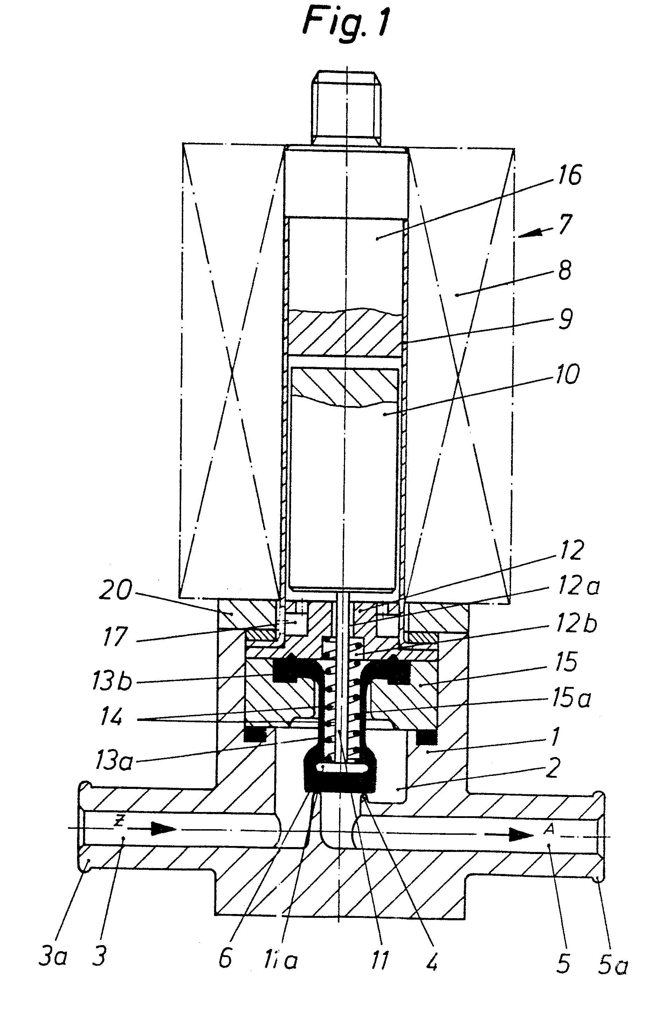

Die in den Fig. 1 bis 3 dargestellten Ausführungsbeispiele eines Elektromagnetventils sind im wesentlichen
gleichartig aufgebaut. Gleiche Bauteile sind daher
jeweils mit gleichen Bezugsziffern versehen.

In Fig. 1 ist ein mit Gleichstrom betriebenes Elektromagnetventil dargestellt. In einem Ventilgehäuse 1 ist eine Ventilkammer 2 angeordnet, die einerseits über einen Zuflußkanal 3 mit einem Druckanschluß 3a und andererseits über einen Ventilsitz 4 und einen Abflußkanal 5 mit einem Arbeitsanschluß 5a verbunden ist. An ihrer Oberseite ist die Ventilkammer 2 abgeschlossen durch zwei in das Ventilgehäuse 1 eingesetzte Einsatzstücke 12 und 15. Die beiden Einsatzstücke 12 und 15 weisen jeweils axiale Bohrungen 12a-12b bzw. 15a auf. Auf das Ventilgehäuse 1 aufgesetzt, ist ein Betätigungsteil 7 mit einer Magnetspule 8, in der axial ein Führungsrohr 9 angeordnet ist. Im unteren Abschnitt des Führungsrohres 9 ist ein Magnetanker 10 verschiebbar geführt. Am Magnetanker 10 ist axial ein Ventilschaft 11 angeordnet, der durch die Bohrungen 12a, 12b und 15a in die Ventilkammer 2 hineingeführt ist. Im oberen Abschnitt des Führungsrohres 9 ist ein Kopfstück 16 fest angeordnet.

In der Ventilkammer 2 und der Bohrung 15a des Einsatzstückes 15 ist koaxial zum Ventilschaft 11 eine Trennmembran angeordnet, die aus einem als Schlauchstück ausgebildeten, den Ventilschaft 11 koaxial umgebenden Mittelteil 13a besteht, an das sich ein nach außen kelchartig öffnendes Außenteil 13b anschließt, das mit seinem Außenrand zwischen die beiden Einsatzstücke 12 und 15 dichtend eingespannt ist. Das untere Ende des Schlauchstückes 13a ist einstückig mit einem Ventilteller 6 verbunden, der sich an einer mit dem Ende des Ventilschaftes 11 verbundenen Endplatte 11a abstützt und dem Ventilsitz 4 gegenüberliegt. Durch die Trennmembran 13a-13b und den Ventilteller 6 ist die Ventilkammer 2 vom Betätigungsteil 7 abgetrennt, wobei innerhalb des Schlauchstückes 13a um den Ventilschaft 11 ein mediumsfreier Raum entsteht. In diesem Raum ist eine zylindrische Schraubendruckfeder 14 angeordnet, deren eines Ende sich an einem Absatz zwischen den Bohrungen 12a und 12b im Einsatzstück 12 abstützt, während ihr anderes Ende an der Oberseite der Endplatte 11a anliegt. Die Dimensionierung des Schlauchstückes 13a sowie der Schraubendruckfeder 14 ist so gewählt, daß, wie Fig. 1 zu entnehmen, die Innenseite des Schlauch-stückes 13a an der Außenseite der Windungen der Schraubendruckfeder 14 anliegt.

An der Oberseite des Ventilgehäuses 1 sind die Einsatzstücke 12 und 15 durch ein Verschlußstück 20 abgedeckt, wobei das Unterteil des Führungsrohres 9 zwischen dem Einsatzstück 12 und dem Verschlußstück 20 eingespannt ist. Der Innenraum des Führungsrohres 9 ist über Durchlässe 17 zwischen Verschlußstück 20 und Einsatzstück 12 mit dem Außenraum verbunden, um einen Druckausgleich zwischen dem Außenraum und dem Innenraum des Führungsrohres 9 und damit auch dem Inneren des Schlauchstückes 13a sicherzustellen.

Die Funktionsweise des in Fig. 1 dargestellten Ventils ist folgende:

Im Ruhezustand des Ventils, also bei nichterregtem Betätigungsteil 7, wird der Ventilteller 6 unter der Wirkung der Schraubendruckfeder 14 auf den Ventilsitz 4 gedrückt. Das Ventil ist geschlossen. Bei Erregung des Betätigungsteils 7 wird der Anker 10 angezogen und dadurch über den Ventilschaft 11 der Ventilteller 6 gegen die Wirkung der Schraubendruckfeder 14 vom Ventilsitz 4 abgehoben.

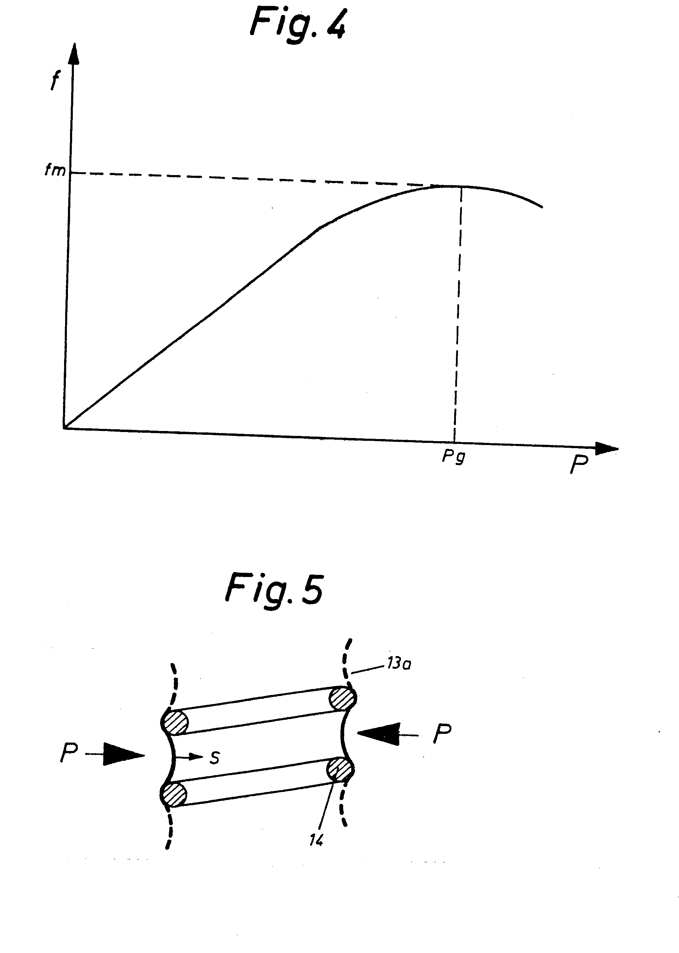

Das Medium strömt durch den Zuflußkanal 3 in Richtung Z ein und verläßt bei geöffnetem Ventil die Ventilkammer 2 in Richtung A durch den Abflußkanal 5. Die vom Mediumsdruck beaufschlagten Flächen am Ventilteller 6 und an der Membran 13a, 13b bewirken, daß bei anstehendem Medium in Abhängigkeit vom Mediumsdruck eine in Schließrichtung wirkende, also die Kraft der Schraubendruckfeder 14 unterstützende Kraftkomponente entsteht. Gleichzeitig wird aber durch den Mediumsdruck das Schlauchstück 13a zwischen die Windungen der Schraubenfeder 14 hin eingedrückt. Diese Verhältnisse sind in Fig. 5 schematisch dargestellt. Wie Fig. 5 zu entnehmen, bewirkt der Mediumsdruck P, daß das Schlauchstück 13a in Richtung S mehr oder weniger tief zwischen die Windungen der Schraubendruckfeder 14 eintritt. Hierdurch wird eine mit dem Mediumsdruck P zunächst ansteigende Kraftkomponente erzeugt, die an den einzelnen Federwindungen so angreift, daß sie die Tendenz hat, die Schraubendruckfeder 14 auseinanderzudrücken, bzw. einer zusammendrückenden Kraft entgegengerichtet ist. Der Verlauf dieser entlastenden Kraftkomponente in Abhängigkeit vom wirkenden Mediumsdruck ist für ein typisches Beispiel in Fig. 4 dargestellt. Der Anstieg der entlastenden Kraftkomponente f in Abhängigkeit vom Druck P beginnt im allgemeinen zunächst linear. Die in Fig. 4 dargestellte Kurve erreicht mit steigendem Druck P sich abflachend ein Maximum bei einem Grenzwert Pg mit einem maximalen Entlastungswert fm. Daran anschließend kann die Entlastungskraft f auch wieder abnehmen. Dies hängt stark davon ab, wie weit das Schlauchstück 13a zwischen die Windungen der Schraubendruckfeder 14 hineingedrückt werden kann.

Das in Fig. 1 dargestellte Elektromagnetventil kann auch als mit Wechselstrom betriebenes Elektromagnetventil ausgebildet werden. Es ist dann lediglich notwendig, in dem im Führungsrohr 9 angeordneten Kopfstück 16 an der dem Anker 10 zugewandten Seite einen Kurzschlußring anzuordnen.

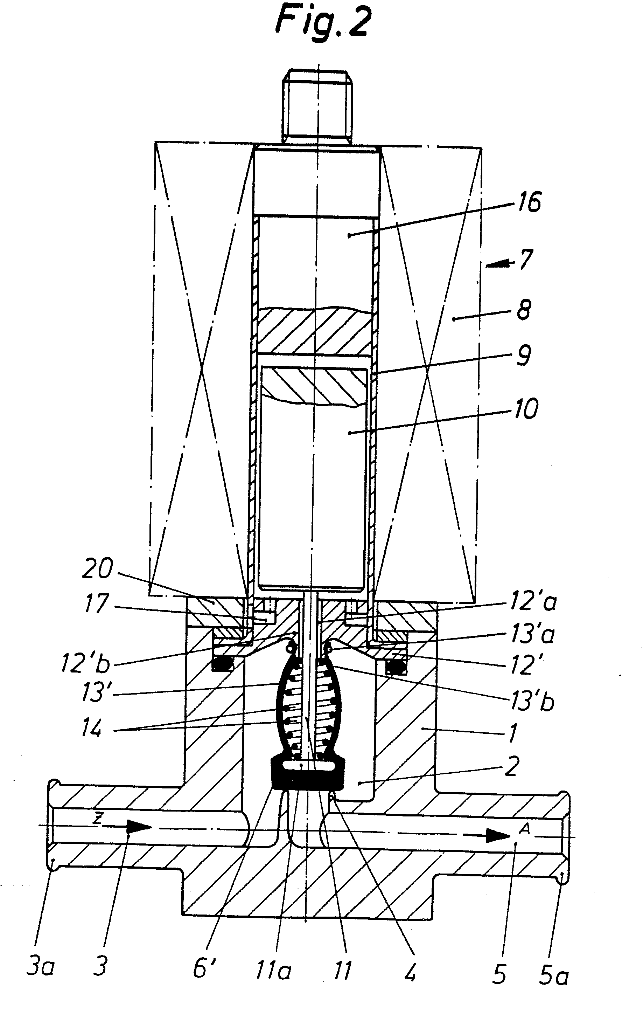

Die in Fig. 2 dargestellte Ausführungsform eines im Ruhezustand schließenden Elektromagnetventils unterscheidet sich von der Ausführungsform nach Fig. 1 dadurch, daß die Mediumstrennung bei dieser Ausführungsform nicht wie bei der Ausführungsform nach Fig. 1 durch eine Trennmembran erfolgt. Vielmehr ist ein den Ventilschaft 11 koaxial umgebendes Schlauchstück 13' mit seinem oberen Ende 13'b mittels einer Manschette 13'a dichtend an ein Ansatzstück 12'b angeschlossen, das an einem die Ventilkammer 2 an ihrer Oberseite abschließenden Einsatzstück 12' angeordnet ist. Eine Bohrung 12'a ist axial im Einsatzstück 12' und Ansatzstück 12'b angeordnet, durch welche der Ventilschaft 11 hindurchgeführt ist. Das untere Ende des Schlauchstückes 13' ist wiederum einstückig mit dem Ventilteller 6' verbunden, der dem Ventilteller 4 gegenüberliegt. Auch bei dieser Ausführungsform ist durch das Schlauchstück 13' die Ventilkammer 2 vom Betätigungsteil 7 abgetrennt. In dem mediumsfreien Raum innerhalb des Schlauchstückes 13' ist eine als Tonnenfeder ausgebildete Schraubendruckfeder 14' angeordnet, deren eines Ende sich am Ansatzstück 12'b und deren anderes Ende sich an der Oberseite der Endplatte 11a abstützt. Die besondere Form der Schraubendruckfeder 14' ermöglicht eine besonders günstige Verteilung der vom Mediumsdruck beaufschlagten wirksamen Flächen in axialer Richtung, wobei durch die besondere Formgebung erreicht werden kann, daß durch den Mediumsdruck infolge der auftretenden Flächendifferenzen möglichst wenig zusätzliche in Öffnungsrichtung wirkende Kräfte erzeugt werden. In den übrigen das Ventilgehäuse betreffenden Bauelementen entspricht die Ausführungsform nach Fig. 2 weitgehend der Ausführungsform nach Fig. 1.

Auch die Funktionsweise des Ventils nach Fig. 2 entspricht genau der Funktionsweise des Ventils nach Fig. 1.

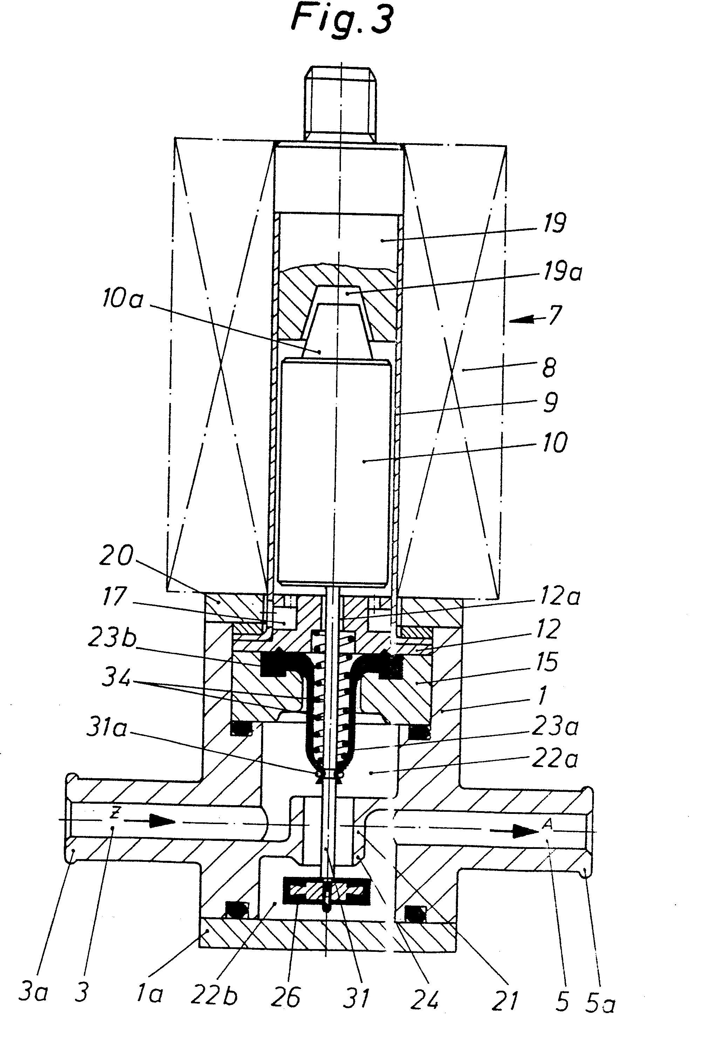

Bei dem in Fig. 3 dargestellten Ventil handelt es sich um ein Elektromagnetventil, das im Ruhezustand geöffnet ist.

Das Ventilgehäuse 1 umfaßt eine Ventilkammer, die aus zwei voneinander getrennten Teilen besteht, nämlich einer oberen Ventilkammer 22a, die mit dem Zuflußkanal 3 verbunden ist und einer unteren Ventilkammer 22b, die mit dem Abflußkanal 5 verbunden ist. Der Ventilsitz 24 befindet sich zwischen den beiden Ventilkammern 22a und 22b.

Der vom Betätigungsteil 7 her in das Ventilgehäuse 1 ragende Ventilschaft 31 ist durch die die obere Ventilkammer 22a abschließenden Einsatzstücke 12 und 15 hindurchgeführt und ist weiterhin von oben durch das die beiden Ventilkammern 22a und 22b trennende Zwischenstück 21 hindurchgeführt und trägt an seinem unteren Ende den Ventilteller 26, der dem vom Betätigungsteil 7 abgewandten Ventilsitz 24 gegenüberliegt. Die untere Ventilkammer 22b ist an ihrer Unterseite durch eine Abschlußplatte 1a verschlossen, während an der Oberseite des Ventilgehäuses 1 die Einsatzstücke 12 und 15 wiederum durch ein Verschlußstück 20 abgedeckt sind.

Koaxial zum Ventilschaft 31 ist in der oberen Ventilkammer 22a eine Trennmembran angeordnet mit einem als
Schlauchstück ausgebildeten Mittelteil 23a, welches den
Ventilschaft 31 auf einem Teil seiner Länge nach abwärts
gerichtet umgibt und das sich aufwärts kelchartig erweiternd in ein Außenteil 23b der Trennmembran übergeht,
dessen Außenränder zwischen den beiden Einsatzstücken 12
und 15 dichtend eingespannt sind, während das untere
Ende des Schlauchstückes 23a mittels einer Befestigungsvorrichtung 31a dichtend am Ventilschaft 31 befestigt
ist. Auch bei dieser Ausführungsform ist die obere
Ventilkammer 22a durch die Trennmembran 23a-23b vom
Betätigungsteil 7 abgetrennt und es entsteht zwischen
dem Schlauchstück 23a und dem Ventil schaft 31 ein Raum,
in dem eine Schraubendruckfeder 34 angeordnet ist, die
sich mit ihrem oberen Ende analog der Ausführungsform
nach Fig. 1 am Einsatzstück 12 abstützt, während ihr
unteres sich kegelstumpfartig verjüngendes Ende sich an
der Befestigungsvorrichtung 31a abstützt.

Wie beispielsweise aus Fig. 3 unmittelbar abzulesen,
wird bei diesem Elektromagnetventil im Ruhezustand, d.h.
im nichterregtem Zustand des Betätigungsteils 7, unter
der Wirkung der Kraft der Schraubendruckfeder 34 der
Ventilteller 26 vom Ventilsitz 24 abgehoben. Das Ventil
ist geöffnet. Das Medium strömt durch den Zuflußkanal 3
in Richtung Z in die obere Ventilkammer 22a ein und
durch den Zuflußkanal 5 in Richtung A aus der unteren
Ventilkammer 22b aus.

Das Ventil schließt, wenn im Betätigungsteil 7 der Anker
10 anzieht und über den mit dem Anker 10 verbundenen
Ventilschaft 31 der Ventilteller 26 gegen die Wirkung
der Schraubendruckfeder 34 an den Ventilsitz 24 angedrückt wird.

Unter dem Einfluß des Mediumsdruckes wird auch bei diesem Ventil das Schlauchstück 23a zwischen die Windungen der Schraubendruckfeder 34 hineingedrückt und bewirkt in der weiter oben anhand der Fig. 6 und 7 beschriebenen Weise eine Entlastung der Schraubendruckfeder 34 in Abhängigkeit vom Mediumsdruck. Im vorliegenden Fall bedeutet dies, daß auch bei hohem Mediumsdruck relativ geringe Kräfte aufgewandt werden müssen, um mittels des Betätigungsteils 7 das Ventil zum Schließen zu bringen.

Die Ausführungsform nach Fig. 3 ist ein mit Gleichstrom betriebenes Elektromagnetventil, bei der, wie bei den vorbeschriebenen Ausführungsformen das Betätigungsteil 7 eine Magnetspule 8 mit einem axialen Führungsrohr 9 aufweist, in dem der Anker 10 verschiebbar geführt ist. An seiner Oberseite weist der Anker 10 ein Ansatzstück 10a auf, das in seiner Kontur einer Ausnehmung 19a im Kopfstück 19 angepaßt ist. Es können somit in an sich bekannter Weise bestimmte Magnetkraftkennlinien erzeugt werden. Wie bei den Ausführungsformen nach Fig. 1 und 2 sind zwischen dem Innenraum des Führungsrohres 9 und dem Außenraum Durchtrittskanäle 17 vorgesehen, die den Druckausgleich sicherstellen.

Sämtliche dargestellten Ausführungsformen haben den Vorteil, daß auch bei hohem Mediumsdruck die Schaltvorgänge mit geringem Aufwand an elektrischer Energie sicher durchgeführt werden können.

Patentansprüche:

1. Ventil, insbesondere Elektromagnetventil, mit Mediumstrennung, mit einem Ventilgehäuse, in dem eine Ventilkammer angeordnet ist, die mit einem Zuflußkanal und über einen Ventilsitz mit einem Abflußkanal verbunden ist und einem am Ventilgehäuse angeordneten Betätigungsteil, dessen bewegbares Betätigungselement über einen durch eine Öffnung in der Wand des Ventilgehäuses geführten Ventilschaft mit einem gegenüber dem Ventilsitz angeordneten Ventilteller verbunden ist und bei dem der in die Ventilkammer ragende Abschnitt des Ventilschaftes mindestens auf einem Teil seiner Länge von einem Schlauchstück aus gummielastischem Material koaxial umgeben ist, dessen eines Ende mit dem Ventilschaft fest und dichtend verbunden ist, während das andere Ende dichtend mit der die Öffnung aufweisenden Wand verbunden ist und bei dem die durch das Betätigungsteil bewirkte Öffnungs- oder Schließbewegung des Ventiltellers gegen die Kraft eines Druckfederelementes--------------------

erfolgt und die vom Mediumsdruck beaufschlagten Flächen innerhalb der Ventilkammer so ausgebildet sind, daß durch den Mediumsdruck eine der Kraft des Druckfederelementes gleichgerichtete Kraftkomponente entsteht, dadurch gekennzeichnet, daß als Druckfederelement eine Schraubendruckfeder (14, 14', 34) oder ein Tellerfederpaket dient, das koaxial zum Ventilschaft (11, 31) zwischen diesem und dem Schlauchstück (13a, 13', 23a) so angeordnet ist, daß die Innenfläche des Schlauchstückes an der Außenseite des Druckfederelementes anliegt und sich ein Ende des Druckfederelementes an der die Öffnung (12a, 12'a) aufweisenden Wand (12, 12') des Ventilgehäuses (1) und das andere Ende an einem mit dem Ventilschaft (11, 31) fest verbundenen Abstützelement (11a, 31a) abstützt.

2. Ventil nach Anspruch 1, dadurch gekennzeichnet, daß bei einem im Ruhezustand geschlossenen Ventil der Ventilsitz (4) der die Öffnung (12a, 12'a) aufweisenden Wand (12, 12') zugekehrt ist und das Schlauchstück (13a, 13') unmittelbar mit dem Ventilteller (6, 6') verbunden ist.

3. Ventil nach Anspruch 2, dadurch gekennzeichnet, daß der Ventilteller (6, 6') in das Schlauchstück (13a, 13') integriert ist.

4. Ventil nach Anspruch 1, dadurch gekennzeichnet, daß bei einem im Ruhezustand geöffneten Ventil der Ventilsitz (24) von der die Öffnung (12a) aufweisenden Wand (12) abgewandt und der Ventilschaft (31) durch den Ventilsitz (24) hindurchgeführt ist und das Ende des Schlauchstückes (23a) mit dem Ventilschaft (31) an einer vor der Durchführung durch den Ventilsitz (24) liegenden Stelle (31a) fest verbunden ist.

5. Ventil nach einem der Ansprüche 1 bis 4 mit einer Schraubendruckfeder, dadurch gekennzeichnet, daß mindestens ein Ende der Schraubendruckfeder (34) kegelstumpfartig verjüngt ausgebildet ist.

6. Ventil nach einem der Ansprüche 1 bis 4 mit einer Schraubendruckfeder, dadurch gekennzeichnet, daß die Schraubendruckfeder als Doppelkegelstumpffeder oder Tonnenfeder (14') ausgebildet ist.

1 / 4

*Fig. 1*

**Fig.3**

0139839

## Fig. 4

## Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | CH - A - 420 762 (E.HERION)<br>* Seite 1, Spalte 2, Zeile 66 - Seite 2, Zeile 2; Fig. 1 *<br>-- | 1-4 | F 16 K 31/06 |
| A | US - A - 4 376 447 (C.L.CHUMLEY)<br>* Fig. 4 *<br>-- | 1,5 | |
| A | US - A - 3 812 398 (J.A.KOZEL)<br>* Gesamt *<br>-- | 1,2,3 | |
| A | US - A-3 325 139 (R.DIENER et al.)<br>* Gesamt *<br>-- | 1 | |
| A | US - A-3 426 798 (J.A.CHERNAK)<br>* Fig. 1,2,5,7 *<br>---- | | |

RECHERCHIERTE SACHGEBIETE (Int. Cl.4)

F 16 K 7/00
F 16 K 31/00
F 16 J 3/00
F 16 J 15/00

Der vorliegende Recherchenbericht wurde für alle Patentansprüche erstellt.

| Recherchenort | Abschlußdatum der Recherche | Prüfer |
|---|---|---|
| WIEN | 16-11-1984 | ROUSSARIAN |

EPA Form 1503 03 82

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument